# EUROPEAN PATENT SPECIFICATION

(11) **EP 2 751 249 B1**
(45) Date of publication and mention of the grant of the patent: **29.07.2015**
(21) Application number: 11770536.8
(22) Date of filing: 02.09.2011
(51) Int. Cl.: C12C 5/02, C12C 7/053

(54) **BEER AND RELEVANT PRODUCTION METHOD.**
BIER UND HERSTELLUNGSVERFAHREN DAFÜR
BIÈRE ET PROCÉDÉ DE PRODUCTION PERTINENT

(43) Date of publication of application: 09.07.2014
(73) Proprietor: Farchioni Olii S.p.A., 06030 Giano Dell'umbria (IT)
(72) Inventor: CLERICI, Carlo, I-06034 Foligno (IT); SETCHELL, Kenneth David Reginald, Cincinnati, OH 45227 (US)
(74) Representative: Baldi, Claudio
(86) International application number: PCT/IT2011/000305
(87) International publication number: WO 2013/030853

(56) References cited:
- CZ-B6- 299 157
- GB-A- 191 203 899
- RU-C1- 2 170 759
- LAPCIK O ET AL: "Identification of isoflavonoids in beer", STEROIDS, ELSEVIER SCIENCE PUBLISHERS, NEW YORK, NY, US, vol. 63, no. 1, 1 January 1998 (1998-01-01), pages 14-20, XP004103055, ISSN: 0039-128X, DOI: 10.1016/S0039-128X(97)00104-9
- CLARKE D B ET AL: "Determination of unusual soya and non-soya phytoestrogen sources in beer, fish products and other foods", FOOD ADDITIVES AND CONTAMINANTS, TAYLOR AND FRANCIS, LONDON, GB, vol. 21, no. 10, 1 October 2004 (2004-10-01), pages 949-962, XP008149399, ISSN: 0265-203X, DOI: 10.1080/02652030400006858
- ROSENBLUM E R ET AL: "Isolation and identification of phytoestrogens from beer", ALCOHOLISM: CLINICAL AND EXPERIMENTAL RESEARCH, WILLIAMS AND WILKINGS, BALTIMORE, MD, US, vol. 16, no. 5, 1 January 1992 (1992-01-01), pages 843-845, XP008149398, ISSN: 0145-6008
- PEDRERA-ZAMORANO J D ET AL: "Effect of beer drinking on ultrasound bone mass in women", NUTRITION, ELSEVIER INC, US, vol. 25, no. 10, 1 October 2009 (2009-10-01), pages 1057-1063, XP026653857, ISSN: 0899-9007, DOI: 10.1016/J.NUT.2009.02.007 [retrieved on 2009-06-13]
- DATABASE WPI Week 200626 Thomson Scientific, London, GB; AN 2006-242179 XP002670372, & CN 1 680 520 A (CHINA FOOD FERMENTATION IND INST) 12 October 2005 (2005-10-12)
- CORNWELL T ET AL: "Dietary phytoestrogens and health", PHYTOCHEMISTRY, PERGAMON PRESS, GB, vol. 65, no. 8, 1 April 2004 (2004-04-01), pages 995-1016, XP004503942, ISSN: 0031-9422, DOI: 10.1016/J.PHYTOCHEM.2004.03.005
- WUTTKE ET AL: "Isoflavones-Safe food additives or dangerous drugs?", AGEING RESEARCH REVIEWS, ELSEVIER, AMSTERDAM, NL, vol. 6, no. 2, 1 August 2007 (2007-08-01), pages 150-188, XP022143354, ISSN: 1568-1637, DOI: 10.1016/J.ARR.2007.05.001

## Description

This patent application for industrial invention concerns an isoflavoneenriched beer and a method to produce said beer.

As it is known, beer is generally produced by means of a fermentation process of cereals and surrogates (barley and hops). During said fermentation process ethanol is developed in the beer, giving a certain alcoholic strength. Acute and chronic abuse of alcohol determines a toxic effect in the human body.

Chronic abuse of alcoholic drinks is a global problem that contributes to many social problems, automobile accidents, attention deficit, hyperactivity disorders, depression and violence. Moreover, chronic alcohol abuse may eventually lead to damage for liver, pancreas, brain and reproductive system.

After ingestion, alcohol is absorbed in the stomach in the proximal region of the small intestine and transported to the liver (Caballeria, et al. 1989). It is metabolized by oxidation by alcohol dehydrogenase enzyme (present in the liver, stomach, jejunum, ileum mucosa and intestinal bacteria) to acetaldehyde, which is further metabolized to acetate by the action of aldehyde dehydrogenase (Lieber 2005).

Moreover, alcohol is metabolized by other non-classical pathways. During the metabolism of alcohol there occurs the production of vast amounts of damaging oxy-free radicals that cause significant oxidative stress with consequent damage to tissues. The generation of oxy-free radicals leads to increased lipid peroxidation that contributes to both vascular and hepatic injury. (Lieber 1988). Increased production of acetaldehyde from acute and chronic alcohol intake leads to an impairment in the body's defense system designed to protect against oxidative stress and particularly the glutathione peroxidase pathway that is responsible for mopping-up reactive oxygen species (ROS).

Inhibition of glutathione peroxidase and reductase and depletion of glutathione (GSH) results in a vicious cycle whereby further alcohol exposure leads to increasing production of ROS and concomitant tissue damage (Remmer, et al. 1989).

CN1680520 **discloses a method for preparing healthy beer comprising added soybean isoflavone, wherein an aqueous solution containing soybean isoflavone is added to beer after fermentation.**

The purpose of the present invention is to eliminate the drawbacks of traditional beers, by providing a novel type of beer that is able to significantly reduce or totally eliminate the toxic effect of alcohol on the human body.

Said purpose has been achieved according to the invention with the characteristics described in the enclosed claim 1.

Advantageous embodiments appear from the dependent claims.

The beer of the invention comprises a contents of isoflavones in their biologically active aglycon form, preferably higher than 2.5mg/L in the final beer product.

Preferably, isoflavones are selected from a group consisting in daidzein, genistein and glycitein, either individually or in mixtures of their aglycon forms, or any form of glucoside or β-glycoside conjugates, where the conjugate is coupled through C-4*'* or C-7 positions of the isoflavone skeleton so that upon hydrolysis this will produce the aglycon forms of these isoflavones.

Advantageously, the sources of isoflavones are predominantly composed of daidzin and to a lesser extent genistin and glycitin.

In particular, the sources of isoflavones are composed by daidzin in form of malonylglucosides, acetylglucosides or glycosides. Daidzin is hydrolyzed during the conditions used in the production of beer in order to produce a beer that has a high daidzein content. So, when consumed, because of the high daidzein contents in the beer, it will facilitate the formation of metabolite S-(-)equol in the intestine, which is the most biologically active metabolite of the daidzein isoflavone.

Advantageously, the beer of the invention may comprise metabolite S-(-)equol that is the isoflavone with higher biological activity. Equol can be found on the market.

Said isoflavones can be also selected from a group consisting of formononetin, biochanin A, puerarin, either individually or in mixture of their aglycon forms, or any form of glycosidic conjugates that upon hydrolysis will yield the aglycon forms of these isoflavones.

Said aglycon isoflavones may be added to the beer using natural substances that contain glycon isoflavones, such as soybeans, kudzu and clovers, or by means of synthesis substances that consist in aglycon isoflavones, normally found on the market.

When using natural substances that contain glycon isoflavones, said substances are added before the fermentation process of the beer so that glycon isoflavones reacting with the enzymes contained in the cereals of the beer are transformed in aglycon isoflavones.

Amongst the natural substances that contain isoflavones, soy germ is preferably chosen. Amongst cereals for production of beer, barley is preferably chosen.

Isoflavones are a class of diphenolic compounds present in nature, but are particularly abundant in soybeans (Setchell and Cassidy 1999; Setchell 1998)and mainly in a fraction of it defined as soy germ.

These compounds are found in nature in the conjugated forms of malonylglucosides, acetylglucosides and β-glucosides (Coward, et al. 1993) and, under these forms, they are biologically inactive and not bioavailable (Setchell, et al. 2002). After ingestion of the isoflavones conjugates (glycons), hydrolysis takes place in the intestine by the action of brush border intestinal glucosidases and bacterial glucosidases and transformed in biologically active and bioavailable aglycon forms (Setchell et al. 2002). The hydrolytic step is a time-dependent process and as such this reduces the efficacy of isoflavones in most Western soy foods (Setchell and Clerici 2010). The advantages of delivering isoflavones in their aglycon forms are that intestinal absorption will be more rapid than if they are delivered as conjugates (Izumi, et al. 2000; Setchell and Clerici 2010; Watanabe, et al. 1998) that require prior hydrolysis for bioavailability (Setchell et al. 2002).

In the case of this novel beer, there are distinct advantages of combining isoflavones aglycons in the liquid matrix of the beer in order to render their rapid absorption and therefore increase biologically potency.

Isoflavones possess different biological activities, both hormonal and non-hormonal. Most have good antioxidant capacity (Rice-Evans, et al. 1995), and in particular the metabolite of daidzein, S-(-) equol is significantly greater in antioxidant activity than its precursor (Arora, et al. 1998; Mitchell, et al. 1998; Ruiz-Larrea, et al. 1997).

Isoflavones also influence the expression of many genes in both animals and humans (Diel, et al. 2000; Niculescu, et al. 2007).

The novel beer contains active molecules of isoflavones aglycons generated during the production of the beer and is aimed at reducing or minimizing the negative effects of alcohol in the body when the beer is consumed. Beer and other alcoholic drinks normally contain only traces of isoflavones (Clarke, et al. 2004; Kuhnle, et al. 2008; Lapcik, et al. 1998; Milligan, et al. 1999). These are ubiquitous in the plant kingdom (Bradbury and White 1954; Farnsworth, et al. 1975) but the level of isoflavones is insufficient to have any health benefits. The advantages of incorporating isoflavones, specifically in the aglycon form, as opposed to the conjugated form, into the beer matrix is to greatly increase the antioxidant capacity of the beer and to more rapidly enhance the intestinal absorption of isoflavones, both being important factors to better facilitate health benefits when consumed.

In the present invention a method has been devised to incorporate natural isoflavones aglycons in their biologically active form to oppose the toxic effects of alcohol in the body.

A novelty in this invention is that by bringing together the combination of soy germ with barley, hops, spelt or a mixture of the same in presence or absence of other cereals and legumes used for the production of beer, there occurs a delivering of aglycon forms sufficient to have biological effects within the body.

A further novelty lies in the ability under special conditions to utilize enzymes within the barley, spelt, hops and legumes to bring about efficient hydrolysis of isoflavone glucosides in the added soy germ.

Furthermore, a novel aspect is the production of a beer that contains predominantly the isoflavone aglycon daidzein, in order to enhance the production in the body of the more potent metabolite S-(-) equol which has even greater biological potency than daidzein (Setchell and Clerici 2010).

A further novelty of the invention is that having isoflavones present within the beer will result in a beer with high antioxidant capacity and because of the liquid matrix very rapid increases in blood levels of isoflavones will occur concomitant with the absorption of alcohol. The potent antioxidant properties of the isoflavones will buffer or negate the toxicity of beer.

Animal studies have shown that the isoflavone rich plant kudzu (Pueraria lobata) reduces alcohol dependency in the golden Syrian hamster model of alcoholism and that the effect was attributed to the presence of the conjugated isoflavones daidzin and peurarin found in this plant (Keung, et al. 1995).

Moreover, it was shown that daidzin affects the metabolism of alcohol (Keung 1993; Xie, et al. 1994). Some scientific observations have shown different scientific results from the ones obtained in animals; in fact when an extract of kudzu was tested for its ability to treat patients with alcohol dependence and craving, the results were no different than placebo (Shebek and Rindone 2000). We attribute this to the fact that these isoflavones were administered predominantly in conjugated form (glucosides).

Furthermore, in all previous published studies, isoflavones were administered to treat alcoholism and not to prevent the toxic effect of alcohol. Instead, the present invention concerns a novel beer that incorporates isoflavones in biologically active form within the liquid matrix in order to prevent the toxicity of alcohol in the beer. The invention may also be applied to other similar beverages.

Further characteristics of the invention will appear evident from the detailed description below, which refers to merely illustrative, not limiting examples and embodiments, illustrated in the enclosed drawings, wherein:
Figure 1 illustrates two histograms showing respectively the quantity of daidzin and daidzein detected over time in an initial solution of barley and daidzin.
Figure 2 is a graph showing conversion of daidzin and genistin (β-glicosides) over time in aglycons (daidzein and ginistein) in a solution of barley and soy germ.
Figure 3 is a block diagram showing the production process of the beer according to the invention.
Figure 4 is a chart obtained from HPLC analysis with UV detection (260nm), showing the isoflavone composition added to the mixture before production of the beer.
Figure 5 is a chart obtained from HPLC analysis with UV detection (260nm), showing the isoflavone composition in the beer produced with the process of the invention.

Following are some examples that demonstrate the ability of some enzymes contained in milled barley of hydrolyzing conjugated isoflavones in their aglycon forms.

Example 1. (Mixture of Barley and Daidzin in vitro).

In the following example, milled barley (10gr) was soaked in distilled water (50ml) in a glass vessel and heated to 64°C. Daidzin (1 mg) was added and the mixture was continuously stirred for 4 h.

During this time, a 2ml aliquot was removed from the mixture at the following sequential times, 0, 5, 10, 15, 30, 60, 120 and 240 minutes and added to 4 ml of methanol in order to inactivate any further enzyme activity.

Then the sample was diluted to 100ml with water and the extraction of isoflavones was achieved by passing the sample through a C₁₈ solid-phase extraction cartridge. After washing the cartridge with water, isoflavones and their conjugates were recovered by elution with methanol (4 ml).

The isoflavone composition, that is of conjugated and unconjugated forms (aglycons), was determined by reverse phase high performance liquid chromatography (HPLC) with ultraviolet detection or with mass spectrometry and the concentrations of each isoflavone were quantified. Chromatographic separation of the isoflavones was achieved on a Varian Microb (150 by 4.6mm) HPLC column with gradient method elution as follows: Mobile phase A (10mM, ammonium acetate and 1 ml TFA in 1000ml water) and mobile phase B (acetonitrile) starting from 5% mobile phase B and holding for 0.2 min, after 20 minutes the mobile phase gas changed to 20%, the 27 % after 3 min, take another 5 min to get 30%, and 7 min to 60%. After 3 min change to 100% mobile phase B and hold for 3 min, then change back to 5% mobile phase B in 3 min and equilibrate for another 6 min. The total run time was 50 min. The column temperature was 30°C and detection gas at wavelength 260nm

The results from this in vitro study serve to demonstrate proof of principle that milled barley can be used to effect efficient hydrolysis of isoflavone β-glucosides and that these are completely converted to aglycons, biologically active forms. In this example daidzin was used as the model isoflavone conjugate because it is the major isoflavone in soy germ and the precursor to the intestinally derived metabolite S-(-)equol.

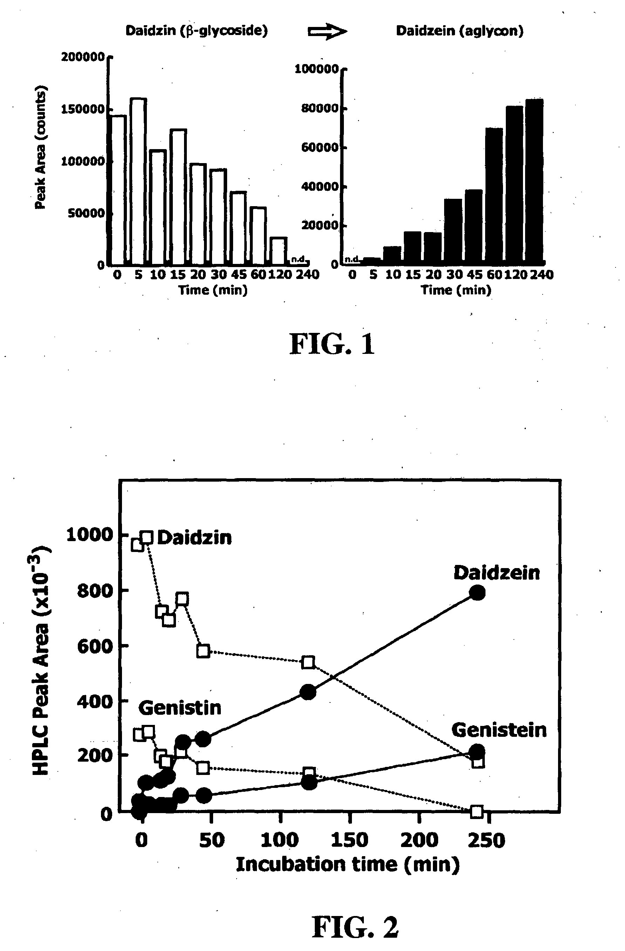

Referring to Fig. 1, quantitative data showing disappearance of daidzin (β-glycoside) over time when 1 mg pure daidzin was incubated with milled barley and incubated at 64°C. Rapid hydrolysis of the conjugated isoflavone is demonstrated, so that by 4h post incubation there is a complete disappearance of daidzin from the reaction mixture. Daidzin is converted to the aglycon form, daidzein, as evident in Figure 1 from the increasing appearance of daidzein in the reaction mixture (n.d. = not detected). Quantitative data in vitro confirm the reaction between barley and pure daidzin with effect of hydrolysis on daidzin that is converted in daidzein.

### Example 2. (Mixture of Barley and Soy Germ in vitro).

In the following example, milled barley (10gr) was soaked in distilled water (50ml) in a glass vessel and heated to 64°C. Soy germ (1 g) was added and the mixture was continuously stirred for 4 h.

During this time, a 2ml aliquot was removed from the mixture at the following sequential times, 0, 5, 10, 15, 30, 60, 120 and 240 minutes and added to 4 ml methanol in order to inactivate any further enzyme activity.

Then the sample was diluted to 100ml with water and the extraction of isoflavones was achieved by passing the sample through a C₁₈ solid-phase extraction cartridge. After washing the cartridge with water, isoflavones and their conjugates were recovered by elution with methanol (4 ml).

The isoflavone composition, that is of conjugated and unconjugated forms (aglycons), was determined by reverse phase high performance liquid chromatography (HPLC) with ultraviolet detection or with mass spectrometry and the concentrations of each isoflavone were quantified as described below.

Referring to Figure 2, the quantitative data show conversion of daidzin and genistin (β-glycosides) over time into daidzein and ginistein, when 1 g of soy germ was incubated with milled barley and incubated at 64°C. The conjugated isoflavones naturally present in soy germ were rapidly hydrolyzed so that after 4 h post-incubation complete disappearance of daidzin and genistin and their conversion into aglycons (daidzein and ginistein).

Example 2 demonstrates and confirms that milled barley has the ability of hydrolyzing the conjugated isoflavones in their bioactive aglycon forms when these isoflavones are present in soy germ.

### Example 3. (Production of beer in a pilot plant)

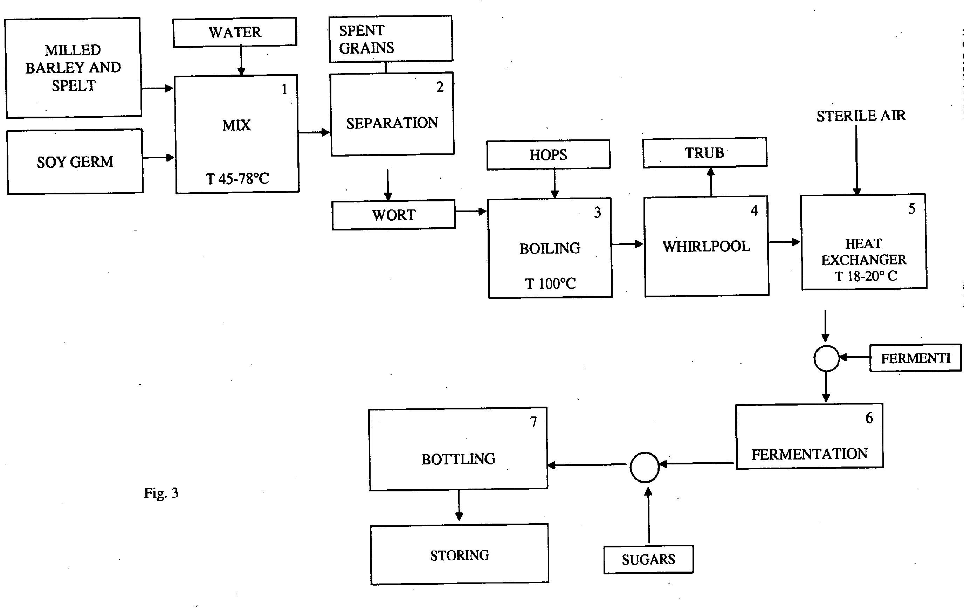

Referring to Fig. 3, the beer was produced in a pilot plant composed of a brewhouse with 4 stainless steel vessels (mashing vessel (1), wort separation vessel (2), boiling vessel (3) and whirlpool separator (4)), cylindroconical fermentation vessels (6) and a bottling machine (7).

The first step of production is the milling of barley malt and spelt. The example described above is based on the production of 100 liters of beer, but the process can be scaled up or down by proportionally adjusting the amounts of the ingredients. Based upon a 100 l production run, 15.0 kg of milled barley (can be 14.5kg) and 8.0 kg of spelt (can be 7.6-8.4 kg) are milled on a roller mill with a width of 0.5 mm between the rollers.

The milled mixture is then soaked in 70 l of water in the mashing vessel (1) and 200 g of soy germ (can be 100-500gr) is added depending on the final concentration of isoflavones required. The mixture is continuously stirred at a temperature of 45°C.

The mixture is heated in the temperature range 45°C - 78°C for 120 minutes (range 30-240 min) to increase the exposure and ability of the enzymes within the milled barley to degrade their target substrates (starch, proteins, high molecular weight carbohydrates, etc.), and favor the hydrolysis of the isoflavones glucosides from the added soy germ.

When this step is complete, the mash is transferred to a lautering vessel (2) to separate of the clear wort from the spent grains and other from the solubles using a false bottom inside the vessel.

The mash is typically allowed to settle for 10 min. The clear wort is separated from the spent grains by several spargings of the mash with hot water at 78°C. The clear wort, containing the isoflavones, is transferred to a boil kettle (3) and the temperature raised to 100°C for 75 minutes, to evaporate approximately 6-8% of the wort in order to concentrate the sugars (maltose). In this step, 100 grams of hop pellets are added to the boiling wort (3).

The boiled wort is transferred to a whirlpool vessel (4) to allow the trub, also called hot break, (coagulated proteins and tannins from barley and hops) to settle to centre of the vessel. The clarified wort is cooled from 95°C to 18-20°C by a heat exchanger (5) and is aerated with sterile air before it is transferred to a fermentation vessel. During this transfer, the wort was inoculated with a starter yeast (type Saccaromyces cervisiae, Saccaromyces pastorianus, or species of Brettanomyces) prepared with 30 g of dried yeast and 600 ml of wort at 13°P degree (a Plato degree is the conventional evaluation of maltose concentration in the wort, 1°P=1 gr. of maltose in 100 gr of wort, the Plato degree corresponds to the density of the wort, so it is often called Original Gravity).

The first fermentation phase in the fermentation vessel (6) takes place over 6 days at 20°C. At the end of this first fermentation, the temperature of the beer is decreased from 20°C to 4°C, and the beer is maintained at this temperature for 3 days, enhancing the sedimentation of the yeast on the bottom of the fermentation vessel (6). At this point, most of fermentable sugars present in the wort have been transformed in ethanol and carbon dioxide, and fermentation will continue in the bottle.

Sugar (4.5ml of sucrose per liter) is added and then the beer is bottled with a bottling machine (7). The last phase is the bottle-conditioning phase and lasts for 15 days at a temperature of 20°C. The final step is to store the bottles in a cool cellar at 4°C to sediment the yeast.

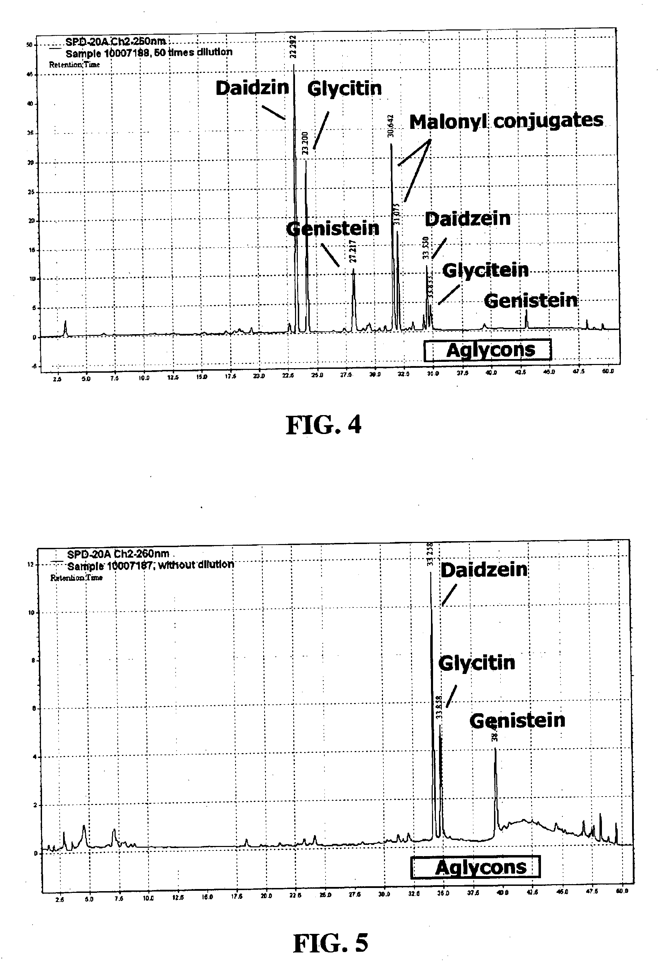

Confirmation that this novel invention yielded a beer that contained isoflavone aglycons synthesized as a result of the novel interaction between enzymes present in milled barley and the isoflavone conjugates contained in soy germ is evident by comparison of the HPLC chromatograms of the isoflavones in the starting mash and the final bottled beer. A complete conversion is evident by comparison of Figure 4 and Figure 5.

Referring to Fig. 4, HPLC analysis with UV detection (260nm) shows the isoflavone composition of soy germ added to the mash prior to the production of beer. HPLC analysis was performed essentially as described previously and the individual isoflavones were identified from the retention indices relative to pure isoflavone standards. Soy germ contains mostly isoflavones in the glucoside forms and has a predominance of daidzin and glycitin forms, with relatively low proportions of genistin. The amount of unconjugated aglycons (daidzein, glycitein and ginistein), which are the biologically active forms, is extremely low to negligible.

Referring to Fig. 4, HPLC analysis with UV detection (260nm) shows the composition of the beer produced by the process described above. HPLC analysis was performed essentially as described previously and the individual isoflavones were identified from the retention indices relative to isoflavone standards. After combining soy germ with the mash, HPLC analysis confirmed that enzymes present in the mash efficiently cleave isoflavone glucosides in soy germ leaving the final beer product with only isoflavone aglycons and no detectable glucosides. The relative proportions of daidzein, glycitein and ginistein in the beer are reflective of their composition in the soy germ.

Quantitative HPLC analysis of the total isoflavone composition (µmol/L) of the initial mash and the final beer product was carried out in a production run of 100 L in which soy germ is added to the mash. Based on an average molecular weight of isoflavone aglycons of 260 Daltons, the beer contained 14.3mg/L.

Table 1 shows the total isoflavone composition in the mash at the start of the fermentation and in the final beer product.

**Table 1**

| | Total Conjugates | Total Aglycons |
|---|---|---|
| Start of fermentation | 87µmol/L | 75µmol/L |
| Final beer product | 0µmol/L | 55µmol/L |

One aspect of this invention is directed to the production of a novel beer, naturally enriched in isoflavone aglycons, the biologically active and bioavailable forms of isoflavones, in order to reduce or buffer the toxicity of alcohol in the body.

A second aspect of this invention is directed to the production of a beer that contains isoflavones derived from natural resources including soybeans, soybean fractions such as the germ or hypocotyl, or isolated and purified soy proteins containing isoflavones, or isoflavones extracted from such products that are added to, blended, or incorporated at the start of beer production (mashing). A beer is yielded with the composition of naturally produced isoflavones in the biologically active (aglycon) forms by combining these ingredients with barley, hops or spelt, or combinations thereof, in the presence or absence of other cereals or lentils used to make beer. The use of appropriate fermentation conditions also allows to hydrolyze the conjugate form of isoflavones (glycon forms) by utilizing the natural activity of β-glucosidases in barley or hops or other cereals.

A further aspect of this invention concerns the production of a beer that by incorporation of isoflavones derived from soy germ, is high in daidzein content, an isoflavone that is metabolized at intestinal level to S-(-)equol, a highly bioactive metabolite when the beer is consumed.

A further aspect of this invention concerns the production of isoflavone aglycons in beer in order to buffer and reduce the toxicity of the alcohol in beer, by stimulating the expression of the antioxidant defense system in the body in order to neutralize free-radicals generated in the ethanol detoxification process. By reducing the formation and presence of free-radicals the isoflavones aglycons in beer will reduce oxidative stress. Thus, a 'healthier' beer is obtained.

The experiments performed have shown that beer enriched with biologically active isoflavones aglycons can be used to influence estrogen metabolism to prevent gynecomastia associated with chronic alcohol consumption in men.

Moreover, these experiments have shown that beer enriched with isoflavones aglycons can be used to negate the negative effects of alcohol on vascular function associated with penile erection.

Although several aspects of the invention have been discussed in detail above, the scope of the invention is not limited to these aspects, and instead, is determined by the following claims.

## Claims

1. A method of making beer by mashing barley containing β-glucosidases enzymes and soy germ containing isoflavones glucosides (Glycon) which are biologically inactive, wherein
- the mash step is performed at a temperature in the range of 45° - 78 °C or for a time of 30-240 minutes, in order to obtain the hydrolysis between the isoflavones glucosides (Glycon) contained in the soy germ and β-giucosidases enzymes contained in the barley, so as the isoflavones glucosides (Glycon) is transformed in isoflavones aglycon which are biologically active,
- in the mash of beer is added an amount of soy germ in the range of 0.1%-10% weight-volume (w/v), in order to have a concentration of aglycons isoflavone of >2.5mg/L in the final product.

2. Method according to claim 1, wherein said isoflavones glucosides (Glycon) contained in the soy germ comprises Daidzin that can then be hydrolyzed during the mash steep of beer, in order to produce a beer that has a high Daidzein content so that when consumed it will facilitate the formation in the intestine of the more biologically active metabolite S-(-)-equol.

## Patentansprüche

1. Verfahren zur Herstellung von Bier durch die Fermentation von Getreide, welches β-Glucosidase-Enzyme und Sojakeime enthält, die biologisch inaktive glycosidische Isoflavone (Glycone) enthalten, wobei:
- die Mischphase bei einer Temperatur im Bereich von 45° - 78°C für einen Zeitraum von 30 - 240 Minuten ausgeführt wird, um die Hydrolyse zwischen den in den Sojakeimen enthaltenen glycosidischen Isoflavonen (Glyconen) und den im Getreide enthaltenen β-Glucosidase-Enzymen zu erhalten, um die glycosidischen Isoflavone (Glycone) in Aglukon-Isoflavone zu verwandeln, die biologisch aktiv sind;
- beim Mischen des Biers eine im Bereich von 0,1 - 10 % Gew.-% (w/v) liegende Menge von Sojakeimen hinzugefügt wird, um im Endprodukt eine Konzentration von Aglukon-Isoflavonen zu erhalten, die über 2,5 mg/l liegt.

2. Verfahren nach Anspruch 1, wobei die in den Sojakeimen enthaltenen glycosidischen Isoflavone (Glycone) Daidzin umfassen, das während der Phase des Biermischens hydrolisiert wird, um Bier mit einem hohen Gehalt an Daidzein zu erhalten, so dass beim Verzehr des Biers die Bildung des stärker biologisch aktiven Metabolits S-(-) Equol im Darm begünstigt wird.

## Revendications

1. Procédé pour la production de bière obtenu par le processus de fermentation de céréales contenant des enzymes β-glucosidase et de germes de soja contenant des glucides isoflavonés (Aglucones) qui sont biologiquement inactifs, dans lequel:
- la phase de brassage est effectuée à une température comprise dans une plage de 45° - 78°C pour une durée de 30-240 minutes, aux fins d'obtenir l'hydrolyse entre les glucides isoflavonés (Aglucones) contenus dans le germe de soja et les enzymes β-glucosidase contenus dans les céréales, de manière que les glucides isoflavonés (Aglucones) sont transformés en isoflavones aglucones qui sont biologiquement actifs,
- dans le mélange de la bière on ajoute une quantité de germes de soja dans la plage de 0,1-10 % poids- volume (w/v), aux fins d'obtenir dans le produit final une concentration d'isoflavones aglucones de >2,5 mg/L dans le produit final.

2. Procédé selon la revendication 1, où les glucides isoflavonés (Aglucones) contenus dans les germes de soja comprennent de la Daïdzine qui est hydrolysée pendant la phase de brassage de la bière, aux fins d'obtenir une bière qui présente un contenu élevé de Daïdzine, de manière que lorsque la bière sera bue, la formation intestinale du métabolite S-(-)-equol, qui est le métabolite biologiquement le plus actif, sera facilitée.
